# EUROPEAN PATENT SPECIFICATION

(11) **EP 2 866 129 B1**
(45) Date of publication and mention of the grant of the patent: **11.09.2019**
(21) Application number: 13806195.7
(22) Date of filing: 22.05.2013
(51) Int. Cl.: G06F 3/0488, G06F 3/048, G06F 3/041

(54) **CURSOR DISPLAY POSITION DETERMINATION METHOD AND DEVICE**
VERFAHREN UND VORRICHTUNG ZUR BESTIMMUNG EINER CURSORANZEIGEPOSITION
PROCÉDÉ ET DISPOSITIF DE DÉTERMINATION DE POSITION D'AFFICHAGE DE CURSEUR

(30) Priority: 20.06.2012 CN 201210205397
(43) Date of publication of application: 29.04.2015
(73) Proprietor: ZTE Corporation, Shenzhen, Guangdong 518057 (CN)
(72) Inventor: CHEN, Cong, Shenzhen, Guangdong Province 518057 (CN); FANG, Fangming, Shenzhen, Guangdong Province 518057 (CN); LI, Hujun, Shenzhen, Guangdong Province 518057 (CN); CHEN, Hua, Shenzhen, Guangdong Province 518057 (CN)
(74) Representative: Novagraaf Technologies
(86) International application number: PCT/CN2013/076084
(87) International publication number: WO 2013/189224

(56) References cited:
- CN-A- 1 746 832
- CN-A- 101 727 230
- CN-A- 101 727 230
- CN-A- 102 750 035
- CN-A- 102 799 358
- US-A1- 2007 220 448
- US-A1- 2010 083 167
- US-A1- 2010 231 534
- US-A1- 2011 227 844
- US-A1- 2012 013 463

## Description

### Technical Field

The disclosure relates to the field of communications, in particular to a method and device for determining a cursor display position..

### Background

For the current mobile terminal (for example, intelligent mobile phone), if a user need to edit text (for example, sending a message) on it, then an editable area will be formed on the screen of the mobile terminal, and a blinking cursor will also appear in this editable area. With the increase of the text input by the user, the cursor generally moves along the direction where the text increases (for example, moving to the right). When the user realizes that there is a spelling mistake or several characters are missing in the edited text, the following two methods would be adopted generally:
method 1, clicking a text area which needs to be amended directly via a touch medium, for example: the IOS system used in I-phone. The defect of this method lies in not being able to accurately click the text area which needs to be added or amended;
method 2, enabling the cursor to move left and right on the screen by dragging the cursor, until it is moved to the text area which need to be added or amended, and the cursor stops moving when the touch medium leaves the touch screen, for example, the Android system used in most mobile phones. The defect of this method lies in that if the current position of the cursor is far away from the text area which needs to be added or amended, then the touch medium should always execute the operation of dragging the cursor on the touch screen, the operation process of which is complicated.

### Summary

The present invention provides a cursor display position determination method and device, so as to at least solve the problem in related art that the operation of moving a cursor in an editable area of a mobile terminal is complicated.

According to one embodiment of the present invention, a cursor display position determination method is provided.

The cursor display position determination method according to the present invention comprises: when the duration of a contact of a touch medium with a click position in an editable area on a mobile terminal screen is longer than a preset duration, acquiring the click position and the sliding direction of the touch medium starting from the click position; determining the movement direction of the cursor according to the click position and the sliding direction; and moving the cursor to the position to be displayed according to the movement direction.

Determining the movement direction of a cursor according to the click position and the sliding direction comprises: determining an end position of a sliding operation according to the click position and the sliding direction; and determining the movement direction of the cursor according to the acquired click position and the end position.

Determining the movement direction of a cursor according to the acquired click position and the end position comprises: acquiring the coordinate of the click position and the coordinate of the end position; calculating an included angle between the vector displacement from the click position to the end position and a positive coordinate axis, the origin of the coordinates of which is the click position, according to the coordinate of the acquired click position and the coordinate of the end position; and determining the movement direction of the cursor according to the calculated included angle.

Determining the movement direction of the cursor according to the calculated included angle comprises one of the following: if 2kπ - π/4 < α ≤ 2kπ + π/4, then determining that the movement direction of the cursor is to the right; if 2kπ + π/4 < α ≤ 2kπ + 3π/4, then determine that the movement direction of the cursor is upward; if 2kπ + 3π/4 < α ≤ 2kπ + 5π/4, then determine that the movement direction of the cursor is to the left; if 2kπ + 5π/4 < α ≤ 2kπ + 7π/4, then determine that the movement direction of the cursor is downward, where k is an arbitrary integer, π is 180 degree, and a is the included angle.

Moving the cursor to the position to be displayed according to the movement direction comprises: moving the cursor along the movement direction starting from the click position according to a preset frequency; and in response to the movement end operation of the touch medium, determining that the display position of the cursor in the editable area at present is the position to be displayed.

Moving the cursor to the position to be displayed according to the movement direction comprises: determining the duration of sliding according to the click position and the sliding direction; calculating the number of times of movement according to the duration of sliding and the preset movement frequency; and moving the cursor along the movement direction starting from the click position according to the calculated number of times of movement, and determining that the display position of the cursor in the editable area at present is the position to be displayed.

After moving the cursor to the position to be displayed according to the movement direction, the method further comprises: recording the number of times of the touch medium executing a sliding operation on the mobile terminal screen; and when the number of times of sliding operation exceeds a preset number of times, adjusting the preset movement frequency.

According to another embodiment of the present invention, a cursor display position determination device is provided.

The cursor display position determination device according to the present invention comprises: an acquisition module, configured to, when the duration of a contact of a touch medium with a click position in an editable area on a mobile terminal screen is longer than a preset duration, acquire the click position and the sliding direction of the touch medium starting from the click position; a determination module, configured to determine the movement direction of the cursor according to the click position and the sliding direction; and an execution module, configured to move the cursor to the position to be displayed according to the movement direction.

The determination module comprises: a first determination unit, configured to determine an end position of a sliding operation according to the click position and the sliding direction; and a second determination unit, configured to determine the movement direction of the cursor according to the acquired click position and the end position.

The second determination unit comprises: a first acquisition unit, configured to acquire the coordinate of the click position and the coordinate of the end position; a first calculation unit, configured to calculate an included angle between the vector displacement from the click position to the end position and a positive coordinate axis, the origin of the coordinates of which is the click position, according to the coordinate of the acquired click position and the coordinate of the end position; and a third determination unit, configured to determine the movement direction of the cursor according to the calculated included angle.

The third determination unit is configured to, if 2kπ - π/4 < α ≤ 2kπ + π/4, then determine that the movement direction of the cursor is to the right; or if 2kπ + π/4 < α ≤ 2kπ + 3π/4, then determine that the movement direction of the cursor is upward; or if 2kπ + 3π/4 < α ≤ 2kπ + 5π/4, then determine that the movement direction of the cursor is to the left; or if 2kπ + 5π/4 < α ≤ 2kπ + 7π/4, then determine that the movement direction of the cursor is downward, where k is an arbitrary integer, π is 180 degree, and α is the included angle.

The execution module comprises: a movement unit, configured to move the cursor along the movement direction starting from the click position according to a preset frequency; and a fourth determination unit, configured to, in response to the movement end operation of the touch medium, determine that the display position of the cursor in the editable area at present is the position to be displayed.

The execution module further comprises: a fifth determination unit, configured to determine a duration of sliding according to the click position and the sliding direction; and a second calculation unit, configured to calculate the number of times of movement according to the duration of sliding and the preset movement frequency; and a sixth determination unit, configured to move the cursor along the movement direction starting from the click position according to the calculated number of times of movement, and determining that the display position of the cursor in the editable area at present is the position to be displayed.

The above-mentioned device further comprises: a recording module, configured to record the number of times of the touch medium executing a sliding operation on the mobile terminal screen; and an adjustment module, configured to, when the number of times of sliding operation exceeds a preset number of times, adjust the preset movement frequency.

By means of the present invention, the touch medium click the editable area of the mobile terminal, and if the contact duration of the touch medium with the click position exceeds the preset duration, then a sliding operation is executed starting from the click position, and finally it is possible to determine the movement of the cursor in a specific direction according to the click position and sliding direction, until the cursor is moved to the position where the user wants to edit the text; the problem that the operation of moving a cursor in an editable area of a mobile terminal is complicated, thereby effectively viewing the whole text-editing interface via the automatic movement of the cursor, thus facilitating the positioning of the cursor with a simple operation. The invention will be carried out according to the attached independent claims.

### Brief Description of the Drawings

Drawings, provided for further understanding of the disclosure and forming a part of the specification, are used to explain the disclosure together with embodiments of the disclosure rather than to limit the disclosure. In the drawings:
Fig. 1 is a flowchart of a cursor display position determination method according to the embodiments of the present invention;
Fig. 2 is a schematic diagram of a cursor display position determination method according to a preferred embodiment of the present invention;
Fig. 3 is a flowchart of a cursor display position determination method according to a preferred embodiment of the present invention;
Fig. 4 is a structural block diagram of a cursor display position determination device according to the embodiments of the present invention;
Fig. 5 is a structural block diagram of a cursor display position determination device according to a preferred embodiment of the present invention;
Fig. 6 is another structural block diagram of a cursor display position determination device according to a preferred embodiment of the present invention; and
Fig. 7 is still another structural block diagram of a cursor display position determination device according to a preferred embodiment of the present invention.

### Detailed Description of the Embodiments

The disclosure is described below with reference to the accompanying drawings and embodiments in detail.

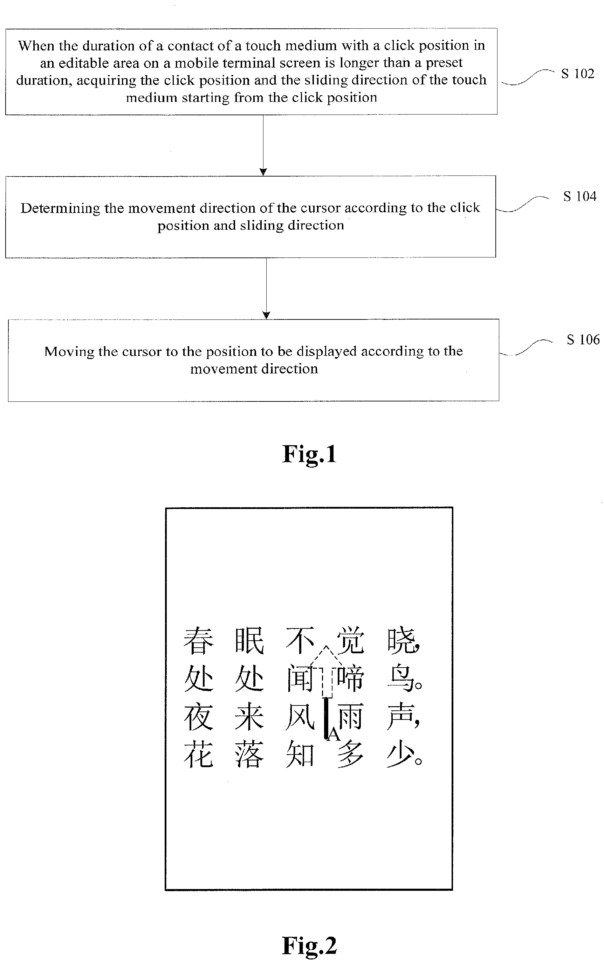

Fig. 1 is a flowchart of a cursor display position determination method according to the embodiments of the present invention. As shown in Fig. 1, the method can comprise the following processing steps:
step S102: when the duration of a contact of a touch medium with a click position in an editable area on a mobile terminal screen is longer than a preset duration, acquiring the click position and the sliding direction of the touch medium starting from the click position;
step S104: determining the movement direction of the cursor according to the click position and sliding direction; and
step S106: moving the cursor to the position to be displayed according to the movement direction.

In the related art, the operation of moving a cursor in an editable area of a mobile terminal is complicated. By means of the invention shown in Fig. 1, the touch medium click the editable area of the mobile terminal (for example, a short message edit area), and if the contact duration of the touch medium with the click position exceeds the preset duration (for example, 5s), then a sliding operation is executed starting from the click position (for example, sliding to the right starting from the click position), and finally it is possible to determine the movement direction of the cursor according to the click position and sliding direction (for example, moving to the right), thus the cursor is moved to the position where the user wants to edit the text; the problem that the operation of moving a cursor in an editable area of a mobile terminal is complicated, thereby effectively viewing the whole text-editing interface via the automatic movement of the cursor, thus facilitating the positioning of the cursor with a simple operation.

In step S104, determining the movement direction of the cursor according to the click position and the sliding direction can comprise the following operations:
step S1: determining an end position of a sliding operation according to the click position and the sliding direction; and
step S2: determining the movement direction of the cursor according to the acquired click position and the end position.

In a preferred embodiment, the click position can be used as the origin of coordinates to establish the horizontal axis and the vertical axis, and at the same time, the ray emitted from the click position passes through the end position; and the movement direction of the cursor can be determined according to the included angle between the ray and the horizontal axis or vertical axis.

In a preferred implementation, in step S2 mentioned above, determining the movement direction of the cursor according to the acquired click position and the end position can comprise the following steps:
step S21: acquiring the coordinate of the click position and the coordinate of the end position;
step S22: calculating an included angle between the vector displacement from the click position to the end position and a positive coordinate axis, the origin of the coordinates of which is the click position, according to the coordinate of the acquired click position and the coordinate of the end position; and
step S23: determining the movement direction of the cursor according to the calculated included angle.

In the preferred embodiment, it is assumed that the coordinates of the click position are A (x1, y1), and the coordinates of the end position are B (x2, y2), then the vector displace AB (x2 - x1, y2 - y1) can be calculated. The included angle α between AB and the positive horizontal axis the origin of which is point A can be calculated by means of the trigonometric function formula, for example, using the formula α= arctan((y2-y1)/(x2-x1)). Of course, A can also be taken as the origin of coordinates (0, 0), then the vector displacement AB = (x2, y2). Now, the formula can be simplified as α= arctan (y2/x2).

In a preferred implementation, in step S23, determining the movement direction of the cursor according to the calculated included angle can comprise one of the following processing: if 2kπ - π/4 < α ≤ 2kπ + π/4, then determining that the movement direction of the cursor is to the right; if 2kπ + π/4 < α ≤ 2kπ + 3π/4, then determine that the movement direction of the cursor is upward; if 2kπ + 3π/4 < α ≤ 2kπ + 5π/4, then determine that the movement direction of the cursor is to the left; if 2kπ + 5π/4 < α ≤ 2kπ + 7π/4, then determine that the movement direction of the cursor is downward, where k is an arbitrary integer, π is 180 degree, and a is the included angle.

In a preferred embodiment, the click position can be adopted as the origin of coordinates, rays are emitted from the origin along the -45 degree, the 45 degree, the 135 degree and 225 degree, respectively, which divide each quadrant. If 2kπ - π/4 < α ≤ 2kπ + π/4, which indicates that the sliding direction is more close to the positive horizontal axis, then it can be determined that the movement direction in the next step is to the right; if 2kπ + π/4 < α ≤ 2kπ + 3π/4, which indicates that the sliding direction is more close to the positive vertical axis, then it can be determined that the movement direction in the next step is upward; if 2kπ + 3π/4 < α ≤ 2kπ + 5π/4, which indicates that the sliding direction is more close to the negative horizontal axis, then it is determined that the movement direction of the cursor is to the left; and if 2kπ + 5π/4 < α ≤ 2kπ + 7π/4, which indicates that the sliding direction is more close to the negative vertical axis, then it is determined that the movement direction of the cursor is downward.

In a preferred embodiment, if the text needs to be edited by the user is in the upper right of the current position of the cursor, the user will consciously perform a sliding operation from the cursor position to the upper right. At this moment, it is required to determine the end position of this sliding operation, and then the current movement direction is determined according to the included angle formed by the vector displace, which is formed by the start position and the end position, with the positive axis of the X axis. For example, when the currently calculated included angle is between -45 degree and 45 degree, the cursor will move right in a preset movement frequency. In response to the click operation of the user on any position of the touch screen, the movement is stopped; and then the touch medium clicks the position where the cursor is located at present, and now the cursor position can be taken at the current click position. Which range the included angle formed by the vector displacement, which is from the position where the cursor is located to the end position, with the positive axis of the X axis falls into is judged according to the sliding operation executed again by the user It is found that the included angle is between positive 45 degree and positive 135 degree after calculation, then it can be determined that the cursor is to move upward. Now, the cursor moves upward in a preset movement frequency; and when the cursor has moved to the text which needs to be edited by the user, the movement is stopped in response to the click operation of the user at any position on the touch screen, and the user can continue to input text.

In step S106, moving the cursor to the position to be displayed according to the movement direction can comprise the following operations:
step S3: moving the cursor along the movement direction starting from the click position according to a preset frequency; and
step S4: in response to the movement end operation of the touch medium, determining that the display position of the cursor in the editable area at present is the position to be displayed.

In a preferred embodiment, the user can set the frequency of the autoscroll of the cursor, for example, automatically moving for 3 times every second. When editing the text in an application interface, for example, short message input and notepad input, the cursor will appear immediately; in addition to this, in other scenarios, for example: viewing a record, a cursor will also appear when the text a some place is clicked, and the current cursor state can be named as state_cursor_idle in the preferred embodiment. Touch and long press the position where the cursor is located, and slide upwards, the cursor will scroll forward from the positioned position automatically in a preset frequency (for example, 3times/s), and the current cursor state can be named as state_cursor_automove_front in the preferred embodiment; Touch and long press the position where the cursor is located, and slide downwards, the cursor will scroll backward from the positioned position automatically in a preset frequency (for example, 3times/s), and the current cursor state can be named as state_cursor_automove_back in the preferred embodiment. When the user sees that the cursor has moved to the position of the text to be edited automatically, light touch any position on the screen, the automatic scrolling of the cursor will stop, and now the cursor state automatically recovers to state_cursor_idle again.

In a preferred embodiment, Fig. 2 is a schematic diagram of a cursor display position determination method according to a preferred embodiment of the present invention. As shown in Fig. 2, the vertical line between " 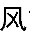 " and " 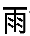 " indicates the current position of the cursor (that is, the click position of the touch screen), which can be denoted by the point A, and now the cursor state is state cursor idle. The upward arrow indicates that the touch medium long presses and drags upwards, and after the touch medium leaves the touch screen, the state of the cursor is changed to state_cursor_automove_front; the cursor will automatically scroll forward thereafter, and the scrolling frequency can be preset by the user.

In step S106, moving the cursor to the position to be displayed according to the movement direction can further comprise the following operations:
step S5: determining the duration of sliding according to the click position and the sliding direction;
step S6: calculating the number of times of movement according to the duration of sliding and the preset movement frequency; and
step S7: moving the cursor along the movement direction starting from the click position according to the calculated number of times of movement, and determining that the display position of the cursor in the editable area at present is the position to be displayed.

In a preferred embodiment, the sliding trace of the touch medium on the touch screen can be determined according to the click position and sliding direction, and the duration of sliding can be determined according to the starting position and end position of the sliding trace, the number of times of movement of the cursor corresponding to each sliding operation can be calculated according to the duration of sliding and preset frequency, and the cursor moves along the movement direction starting from the click position according to the calculated number of times of movement and determine the display position of the cursor in the editable area.

For example, it is determined that the duration of sliding is 2s according to the touch trace of the touch medium, and the preset frequency of the mobile terminal is 3 times/s, it can be calculated that the number of times of movement is 6 times. If the sliding direction is upward, then the cursor will automatically move upward for 6 times, and if the cursor moves 1 line each time, then the cursor will move upward for 6 lines.

Preferably, in step S106, after moving the cursor to the position to be displayed according to the movement direction, the method can further comprise the following operations:
step S8: recording the number of times of the touch medium executing a sliding operation on the mobile terminal screen; and
step S9: when the number of times of sliding operation exceeds a preset number of times, adjusting the preset movement frequency.

In a preferred embodiment, a mobile terminal can record the number of time of the sliding operation executed by the touch medium, for example, when the touch medium slides upward once, but does not arrive at the text position the user desires, at this moment, the user will continue to execute the operation of sliding upward, so that the cursor continues to move upward; in this way, every time the touch medium slide once, the number recorded by the mobile plus one; if the number of times of sliding operation executed by the touch medium exceeds the preset number of times (for example, 3 times), then it indicates that the current preset frequency does not satisfy the requirement of the user, now the mobile terminal can automatically adjust the preset frequency from 3 times/s to 4 times/s.

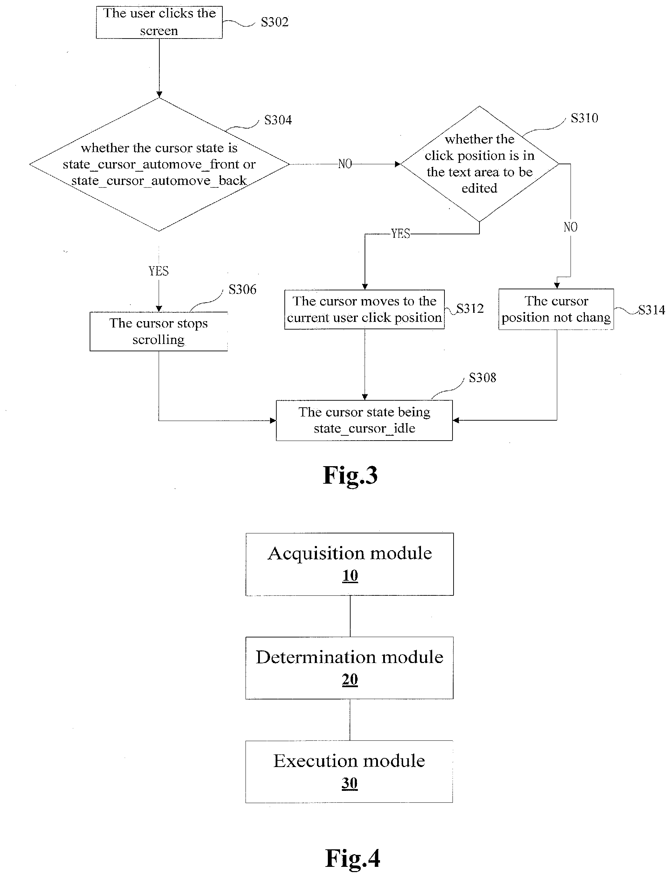

Further description is made to the above-mentioned preferred implementation in combination with the preferred embodiment shown in Fig. 3 below.

Fig. 3 is a flowchart of a cursor display position determination method according to a preferred embodiment of the present invention. As shown in Fig. 3, the flow can comprise the following processing steps:
step S302: the touch medium clicking the editable area of the mobile terminal screen;
step S304: judging the current state of the cursor, if it is state_cursor_automove_front or state_cursor_automove_back, then continuing to execute step S306; and if not, then turning to step S310;
step S306: the cursor scrolling automatically, until it stops scrolling in response to the click operation of the touch medium;
step S308: the state of the cursor being state_cursor_automove_idle;
step S310: judging whether the click position is in the editable area; if yes, then continuing to execute step S312; and if not, then turning to step S314;
step S312: the cursor moving the current click position of the touch medium; and turning to step S308; and
step S314: the position of the cursor not changing; and turning to step S308.

Fig. 4 is a structural block diagram of a cursor display position determination device according to the embodiments of the present invention. As shown in Fig. 4, the cursor display position determination device can comprise: an acquisition module **10,** configured to, when the duration of a contact of a touch medium with a click position in an editable area on a mobile terminal screen is longer than a preset duration, acquire the click position and the sliding direction of the touch medium starting from the click position; a determination module **20,** configured to determine the movement direction of the cursor according to the click position and the sliding direction; and an execution module **30,** configured to move the cursor to the position to be displayed according to the movement direction.

By means of the device shown in Fig. 4, the problem that the operation of moving a cursor in an editable area of a mobile terminal is complicated is solved, thereby effectively viewing the whole text-editing interface via the automatic movement of the cursor, thus facilitating the positioning of the cursor with a simple operation.

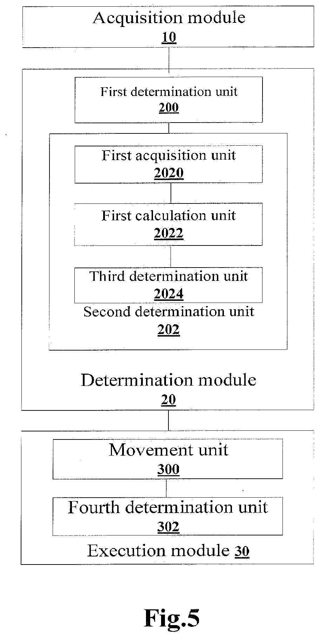

As shown in Fig. 5, the determination module **20** can comprise a first determination unit **200,** configured to determine an end position of a sliding operation according to the click position and the sliding direction; and a second determination unit **202,** configured to determine the movement direction of the cursor according to the acquired click position and the end position.

As shown in Fig. 5, the second determination unit **202** comprises: a first acquisition unit **2020,** configured to acquire the coordinate of the click position and the coordinate of the end position; a first calculation unit **2022,** configured to calculate an included angle between the vector displacement from the click position to the end position and a positive coordinate axis, the origin of the coordinates of which is the click position, according to the coordinate of the acquired click position and the coordinate of the end position; and a third determination unit **2024,** configured to determine the movement direction of the cursor according to the calculated included angle.

In the preferred implementation, the above-mentioned third determination unit **2024** is configured to, if 2kπ - π/4 < α ≤ 2kπ + π/4, then determine that the movement direction of the cursor is to the right; or if 2kπ + π/4 < α ≤ 2kπ + 3π/4, then determine that the movement direction of the cursor is upward; or if 2kπ + 3π/4 < α ≤ 2kπ + 5π/4, then determine that the movement direction of the cursor is to the left; or if 2kπ + 5π/4 < α ≤ 2kπ + 7π/4, then determine that the movement direction of the cursor is downward, where k is an arbitrary integer, π is 180 degree, and a is the included angle.

As shown in Fig. 5, the execution module **30** can comprise: a movement unit **300,** configured to move the cursor along the movement direction starting from the click position according to a preset frequency; and a fourth determination unit **302,** configured to, in response to the movement end operation of the touch medium, determine that the display position of the cursor in the editable area at present is the position to be displayed.

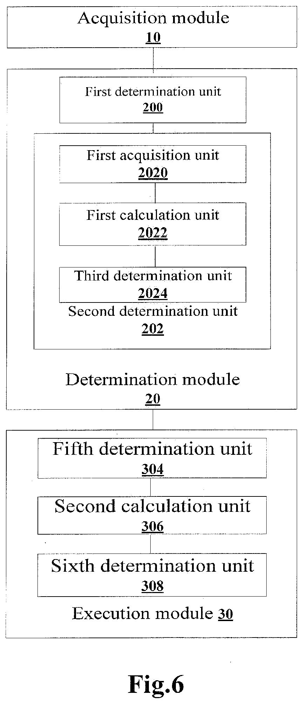

As shown in Fig. 6, the execution module **30** further comprises: a fifth determination unit **304,** configured to determine a duration of sliding according to the click position and the sliding direction; and a second calculation unit **306,** configured to calculate the number of times of movement according to the duration of sliding and the preset movement frequency; and a sixth determination unit **308,** configured to move the cursor along the movement direction starting from the click position according to the calculated number of times of movement, and determining that the display position of the cursor in the editable area at present is the position to be displayed.

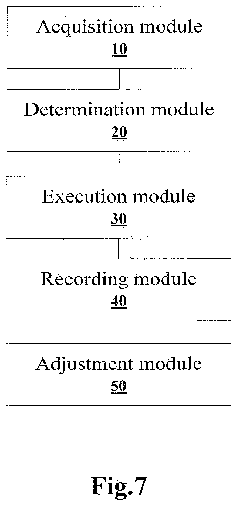

As shown in Fig. 7, the above-mentioned device can further comprise: a recording module **40,** configured to record the number of times of the touch medium executing a sliding operation on the mobile terminal screen; and an adjustment module **50,** configured to, when the number of times of sliding operation exceeds a preset number of times, adjust the preset movement frequency.

It needs to be noted that the preferred operation mode of interaction of each module and each unit shown in Fig. 4 to Fig. 7 with one another can refer to the embodiment shown in Fig. 1 to Fig. 3, which will not be described again here.

It can be seen from the description above that the above-mentioned embodiment has realized the following technical effect (it needs to be noted that these effects are effects that can be arrived by some preferred embodiments): effective viewing of the whole text-editing interface via the automatic movement of the cursor, thus facilitating the positioning of the cursor with a simple operation.

## Claims

1. A method for determining a cursor display position, comprising the steps of:
when the duration of a contact of a touch medium with a click position in an editable area on a mobile terminal screen is longer than a preset duration, acquiring the click position and the sliding direction of the touch medium starting from the click position;
determining the movement direction of the cursor according to the click position and the sliding direction; and
moving the cursor to the position to be displayed according to the movement direction,
wherein determining the movement direction of cursor according to the click position and the sliding direction comprises:
determining an end position of a sliding operation according to the click position and the sliding direction; and
determining the movement direction of the cursor according to the acquired click position and the end position, including:
acquiring the coordinate of the click position and the coordinate of the end position;
calculating an included angle between the vector displacement from the click position to the end position and a positive coordinate axis, the origin of the coordinates of which is the click position, according to the coordinate of the acquired click position and the coordinate of the end position; and
determining the movement direction of the cursor according to the calculated included angle.

2. The method according to claim 1, **characterized in that** determining the movement direction of cursor according to the calculated included angle comprises one of the following:
if 2kπ - π/4 < α ≤ 2kπ + π/4, then determining that the movement direction of the cursor is to the right;
if 2kπ + π/4 < α ≤ 2kπ + 3π/4, then determining that the movement direction of the cursor is upward;
if 2kπ + 3π/4 < α ≤ 2kπ + 5π/4, then determining that the movement direction of the cursor is to the left;
if 2kπ + 5π/4 < α ≤ 2kπ + 7π/4, then determining that the movement direction of the cursor is downward,
where k is an arbitrary integer, π is 180 degree, and a is the included angle.

3. The method according to claim 1 or 2, wherein moving the cursor to the position to be displayed according to the movement direction comprises:
moving the cursor along the movement direction starting from the click position according to a preset moving frequency; and
in response to the movement end operation of the touch medium, determining that the display position of the cursor in the editable area at present is the position to be displayed.

4. The method according to any one of claim 1 to 3, wherein moving the cursor to the position to be displayed according to the movement direction comprises:
determining the duration of sliding according to the click position and the sliding direction;
calculating the number of times of movement according to the duration of sliding and the preset moving frequency; and
moving the cursor along the movement direction starting from the click position according to the calculated number of times of movement, and determining that the display position of the cursor in the editable area at present is the position to be displayed.

5. The method according to claim 3 or 4, wherein after moving the cursor to the position to be displayed according to the movement direction, the method further comprises:
recording the number of times of the touch medium executing a sliding operation on the mobile terminal screen; and
when the number of times of sliding operation exceeds a preset number of times, adjusting the preset moving frequency.

6. A device for determining a cursor display position, comprising:
an acquisition module, configured to, when the duration of a contact of a touch medium with a click position in an editable area on a mobile terminal screen is longer than a preset duration, acquire the click position and the sliding direction of the touch medium starting from the click position;
a determination module, configured to determine the movement direction of the cursor according to the click position and the sliding direction; and
an execution module, configured to move the cursor to the position to be displayed according to the movement direction,
wherein the determination module comprises:
a first determination unit, configured to determine an end position of a sliding operation according to the click position and the sliding direction; and
a second determination unit, configured to determine the movement direction of the cursor according to the acquired click position and the end position, including:
a first acquisition unit, configured to acquire the coordinate of the click position and the coordinate of the end position;
a first calculation unit, configured to calculate an included angle between the vector displacement from the click position to the end position and a positive coordinate axis, the origin of the coordinates of which is the click position, according to the coordinate of the acquired click position and the coordinate of the end position; and
a third determination unit, configured to determine the movement direction of the cursor according to the calculated included angle.

7. The device according to claim 6, wherein the third determination unit is configured to, if 2kπ - π/4 < α ≤ 2kπ + π/4, then determine that the movement direction of the cursor is to the right; or if 2kπ + π/4 < α ≤ 2kπ + 3π/4, then determine that the movement direction of the cursor is upward; or if 2kπ + 3π/4 < α ≤ 2kπ + 5π/4, then determine that the movement direction of the cursor is to the left; or if 2kπ + 5π/4 < α ≤ 2kπ + 7π/4, then determine that the movement direction of the cursor is downward, where k is an arbitrary integer, π is 180 degree, and a is the included angle.

8. The device according to claim 6 or 7, wherein the execution module comprises:
a movement unit, configured to move the cursor along the movement direction starting from the click position according to a preset moving frequency; and
a fourth determination unit, configured to, in response to the movement end operation of the touch medium, determine that the display position of the cursor in the editable area at present is the position to be displayed.

9. The device according to claim 6 or 7, wherein the execution module further comprises:
a fifth determination unit, configured to determine a duration of sliding according to the click position and the sliding direction; and
a second calculation unit, configured to calculate the number of times of movement according to the duration of sliding and the preset moving frequency; and
a sixth determination unit, configured to move the cursor along the movement direction starting from the click position according to the calculated number of times of movement, and determining that the display position of the cursor in the editable area at present is the position to be displayed.

10. The device according to claim 8 or 9, wherein the device further comprises:
a recording module, configured to record the number of times of the touch medium executing a sliding operation on the mobile terminal screen; and
an adjustment module, configured to, when the number of times of sliding operation exceeds a preset number of times, adjust the preset moving frequency.

## Patentansprüche

1. Verfahren zum Bestimmen einer Cursor-Anzeigeposition, umfassend die Schritte des:
Erfassens der Klickposition und der Schieberichtung des Berührmediums beginnend ab der Klickposition, wenn die Dauer eines Kontakts eines Berührmediums mit einer Klickposition in einem bearbeitbaren Bereich auf einem Bildschirm eines mobilen Endgeräts länger ist als eine voreingestellte Dauer;
Bestimmens der Bewegungsrichtung des Cursors gemäß der Klickposition und der Schieberichtung; und
Bewegens des Cursors gemäß der Bewegungsrichtung zu der Position, die angezeigt werden soll,
wobei das Bestimmen der Cursor-Bewegungsrichtung gemäß der Klickposition und der Schieberichtung umfasst:
Bestimmen einer Endposition eines Schiebevorgangs gemäß der Klickposition und der Schieberichtung; und
Bestimmen der Bewegungsrichtung des Cursors gemäß der erfassten Klickposition und der Endposition, einschließlich:
Erfassens der Koordinate der Klickposition und der Koordinate der Endposition;
Berechnens eines eingeschlossenen Winkels zwischen der Vektorverschiebung von der Klickposition zur Endposition und einer positiven Koordinatenachse, der Ursprung deren Koordinaten die Klickposition ist, gemäß der Koordinate der erfassten Klickposition und der Koordinate der Endposition; und
Bestimmens der Bewegungsrichtung des Cursors gemäß dem berechneten eingeschlossenen Winkel.

2. Verfahren nach Anspruch 1, **dadurch gekennzeichnet, dass** das Bestimmen der Cursor-Bewegungsrichtung gemäß dem berechneten eingeschlossenen Winkel eines aus den Folgenden umfasst:
wenn 2kπ - π/4 < α ≤ 2kπ + π/4, dann Bestimmen, dass die Bewegungsrichtung des Cursors nach rechts ist;
wenn 2kπ + π/4 < α ≤ 2kπ + 3π/4, dann Bestimmen, dass die Bewegungsrichtung des Cursors nach oben ist;
wenn 2kπ + 3π/4 < α ≤ 2kπ + 5π/4, dann Bestimmen, dass die Bewegungsrichtung des Cursors nach links ist;
wenn 2kπ + 5π/4 < α ≤ 2kπ + 7π/4, dann Bestimmen, dass die Bewegungsrichtung des Cursors nach unten ist,
wobei k eine beliebige ganze Zahl ist, π 180 Grad ist, und α der eingeschlossene Winkel ist.

3. Verfahren nach Anspruch 1 oder 2, wobei das Bewegen des Cursors gemäß der Bewegungsrichtung zu der Position, die angezeigt werden soll, umfasst:
Bewegen des Cursors gemäß einer voreingestellten Bewegungsfrequenz ab der Klickposition beginnend entlang der Bewegungsrichtung; und
in Antwort auf den Bewegungsendvorgang des Berührmediums, Bestimmen, dass die Anzeigeposition des Cursors im bearbeitbaren Bereich gegenwärtig die Position ist, die angezeigt werden soll.

4. Verfahren nach einem aus Anspruch 1 bis 3, wobei das Bewegen des Cursors gemäß der Bewegungsrichtung zu der Position, die angezeigt werden soll, umfasst:
Bestimmen der Schiebedauer gemäß der Klickposition und der Schieberichtung;
Berechnen der Anzahl an Bewegungen gemäß der Schiebedauer und der voreingestellten Bewegungsfrequenz; und
Bewegen des Cursors gemäß der berechneten Anzahl an Bewegungen ab der Klickposition beginnend entlang der Bewegungsrichtung, und Bestimmen, dass die Anzeigeposition des Cursors im bearbeitbaren Bereich gegenwärtig die Position ist, die angezeigt werden soll.

5. Verfahren nach Anspruch 3 oder 4, wobei nach dem Bewegen des Cursors gemäß der Bewegungsrichtung zu der Position, die angezeigt werden soll, das Verfahren weiter umfasst:
Aufzeichnen der Anzahl, die das Berührmedium einen Schiebevorgang auf dem Bildschirm des mobilen Endgeräts ausführt; und
wenn die Anzahl an Schiebevorgängen eine voreingestellte Anzahl übersteigt, Anpassen der voreingestellten Bewegungsfrequenz.

6. Vorrichtung zum Bestimmen einer Cursor-Anzeigeposition, umfassend:
ein Erfassungsmodul, das dazu konfiguriert ist, wenn die Dauer eines Kontakts eines Berührmediums mit einer Klickposition in einem bearbeitbaren Bereich auf einem Bildschirm eines mobilen Endgeräts länger ist als eine voreingestellte Dauer, die Klickposition und die Schieberichtung des Berührmediums beginnend ab der Klickposition zu erfassen;
ein Bestimmungsmodul, das dazu konfiguriert ist, gemäß der Klickposition und der Schieberichtung die Bewegungsrichtung des Cursors zu bestimmen; und
ein Ausführungsmodul, das dazu konfiguriert ist, den Cursor gemäß der Bewegungsrichtung zu der Position zu bewegen, die angezeigt werden soll,
wobei das Bestimmungsmodul umfasst:
eine erste Bestimmungseinheit, die dazu konfiguriert ist, gemäß der Klickposition und der Schieberichtung eine Endposition eines Schiebevorgangs zu bestimmen; und
eine zweite Bestimmungseinheit, die dazu konfiguriert ist, gemäß der erfassten Klickposition und der Endposition die Bewegungsrichtung des Cursors zu bestimmen, einschließlich:
einer ersten Erfassungseinheit, die dazu konfiguriert ist, die Koordinate der Klickposition und die Koordinate der Endposition zu erfassen;
einer ersten Berechnungseinheit, die dazu konfiguriert ist, einen eingeschlossenen Winkel zwischen der Vektorverschiebung von der Klickposition zur Endposition und einer positiven Koordinatenachse, der Ursprung deren Koordinaten die Klickposition ist, gemäß der Koordinate der erfassten Klickposition und der Koordinate der Endposition zu berechnen; und
eine dritte Bestimmungseinheit, die dazu konfiguriert ist, gemäß dem berechneten eingeschlossenen Winkel die Bewegungsrichtung des Cursors zu bestimmen.

7. Vorrichtung nach Anspruch 6, wobei die dritte Bestimmungseinheit dazu konfiguriert ist, wenn 2kπ - π/4 < α ≤ 2kπ + π/4, dann zu bestimmen, dass die Bewegungsrichtung des Cursors nach rechts ist; oder wenn 2kπ + π/4 < α ≤ 2kπ + 3π/4, dann zu bestimmen, dass die Bewegungsrichtung des Cursors nach oben ist; oder wenn 2kπ + 3π/4 < α ≤ 2kπ + 5π/4, dann zu bestimmen, dass die Bewegungsrichtung des Cursors nach links ist; oder wenn 2kπ + 5π/4 < α ≤ 2kπ + 7π/4, dann zu bestimmen, dass die Bewegungsrichtung des Cursors nach unten ist, wobei k eine beliebige ganze Zahl ist, π 180 Grad ist, und α der eingeschlossene Winkel ist.

8. Vorrichtung nach Anspruch 6 oder 7, wobei das Ausführungsmodul umfasst:
eine Bewegungseinheit, die dazu konfiguriert ist, den Cursor gemäß einer voreingestellten Bewegungsfrequenz ab der Klickposition beginnend entlang der Bewegungsrichtung zu bewegen; und
eine vierte Bestimmungseinheit, die dazu konfiguriert ist, in Antwort auf den Bewegungsendvorgang des Berührmediums zu bestimmen, dass die Anzeigeposition des Cursors im bearbeitbaren Bereich gegenwärtig die Position ist, die angezeigt werden soll.

9. Vorrichtung nach Anspruch 6 oder 7, wobei das Ausführungsmodul weiter umfasst:
eine fünfte Bestimmungseinheit, die dazu konfiguriert ist, gemäß der Klickposition und der Schieberichtung eine Schiebedauer zu bestimmen; und
eine zweite Berechnungseinheit, die dazu konfiguriert ist, gemäß der Schiebedauer und der voreingestellten Bewegungsfrequenz die Anzahl an Bewegungen zu berechnen; und
eine sechste Bestimmungseinheit, die dazu konfiguriert ist, den Cursor gemäß der berechneten Anzahl an Bewegungen ab der Klickposition beginnend entlang der Bewegungsrichtung zu bewegen und zu bestimmen, dass die Anzeigeposition des Cursors im bearbeitbaren Bereich gegenwärtig die Position ist, die angezeigt werden soll.

10. Vorrichtung nach Anspruch 8 oder 9, wobei die Vorrichtung weiter umfasst:
ein Aufzeichnungsmodul, das dazu konfiguriert ist, die Anzahl, die das Berührmedium einen Schiebevorgang auf dem Bildschirm des mobilen Endgeräts ausführt, aufzuzeichnen; und
ein Anpassungsmodul, das dazu konfiguriert ist, wenn die Anzahl an Schiebevorgängen eine voreingestellte Anzahl übersteigt, die voreingestellte Bewegungsfrequenz anzupassen.

## Revendications

1. Procédé de détermination d'une position d'affichage de curseur, comprenant les étapes suivantes consistant à :
lorsque la durée d'un contact d'un moyen tactile avec une position de clic dans une zone éditable sur un écran de terminal mobile est plus longue qu'une durée prédéfinie, acquérir la position de clic et la direction de glissement du moyen tactile commençant à la position de clic ;
déterminer la direction de mouvement du curseur selon la position de clic et la direction de glissement ; et
déplacer le curseur vers la position à afficher selon la direction de mouvement,
dans lequel la détermination de la direction de mouvement du curseur selon la position de clic et la direction de glissement comprend :
la détermination d'une position finale d'une opération de glissement selon la position de clic et la direction de glissement ; et
la détermination de la direction de mouvement du curseur selon la position de clic acquise et la position finale, incluant :
l'acquisition des coordonnées de la position de clic et des coordonnées de la position finale ;
le calcul d'un angle inclus entre le déplacement vectoriel de la position de clic à la position finale et un axe de coordonnées positives, dont l'origine des coordonnées est la position de clic, selon les coordonnées de la position de clic acquise et les coordonnées de la position finale ; et
la détermination de la direction de mouvement du curseur selon l'angle inclus calculé.

2. Procédé selon la revendication 1, **caractérisé en ce que** la détermination de la direction de mouvement du curseur selon l'angle inclus calculé comprend un de ce qui suit :
si 2kπ - π/4 < α ≤ 2kπ + π/4, alors la détermination que la direction de mouvement du curseur est vers la droite ;
si 2kπ + π/4 < α ≤ 2kπ + 3π/4, alors la détermination que la direction de mouvement du curseur est vers le haut ;
si 2kπ + 3π/4 < α ≤ 2kπ + 5π/4, alors la détermination que la direction de mouvement du curseur est vers la gauche ;
si 2kπ + 5π/4 < α ≤ 2kπ + 7π/4, alors la détermination que la direction de mouvement du curseur est vers le bas,
où k est un nombre entier arbitraire, π est 180 degrés et α est l'angle inclus.

3. Procédé selon la revendication 1 ou 2, dans lequel le mouvement du curseur vers la position à afficher selon la direction de mouvement comprend :
le mouvement du curseur le long de la direction de mouvement commençant à la position de clic selon une fréquence de mouvement prédéfinie ; et
en réponse à l'opération de fin de mouvement du moyen tactile, la détermination que la position d'affichage du curseur dans la zone éditable est actuellement la position à afficher.

4. Procédé selon l'une quelconque des revendications 1 à 3, dans lequel le mouvement du curseur vers la position à afficher selon la direction de mouvement comprend :
la détermination de la durée de glissement selon la position de clic et la direction de glissement ;
le calcul du nombre de mouvements selon la durée de glissement et la fréquence de mouvement prédéfinie ; et
le mouvement du curseur le long de la direction de mouvement commençant à la position de clic selon le nombre de mouvements calculé, et la détermination que la position d'affichage du curseur dans la zone éditable est actuellement la position à afficher.

5. Procédé selon la revendication 3 ou 4, dans lequel après le mouvement du curseur vers la position à afficher selon la direction de mouvement, le procédé comprend en outre :
l'enregistrement du nombre de fois que le moyen tactile exécute une opération de glissement sur l'écran de terminal mobile ; et
lorsque le nombre d'opérations de glissement excède un nombre de fois prédéfini, l'ajustement de la fréquence de mouvement prédéfinie.

6. Dispositif pour déterminer une position d'affichage de curseur, comprenant :
un module d'acquisition, configuré pour, lorsque la durée d'un contact d'un moyen tactile avec une position de clic dans une zone éditable sur un écran de terminal mobile est plus longue qu'une durée prédéfinie, acquérir la position de clic et la direction de glissement du moyen tactile commençant à la position de clic ;
un module de détermination, configuré pour déterminer la direction de mouvement du curseur selon la position de clic et la direction de glissement ; et
un module d'exécution, configuré pour déplacer le curseur vers la position à afficher selon la direction de mouvement,
dans lequel le module de détermination comprend :
une première unité de détermination, configurée pour déterminer une position finale d'une opération de glissement selon la position de clic et la direction de glissement ; et
une deuxième unité de détermination, configurée pour déterminer la direction de mouvement du curseur selon la position de clic acquise et la position finale, incluant :
une première unité d'acquisition, configurée pour acquérir les coordonnées de la position de clic et les coordonnées de la position finale ;
une première unité de calcul, configurée pour calculer un angle inclus entre le déplacement vectoriel de la position de clic à la position finale et un axe de coordonnées positives dont l'origine des coordonnées est la position de clic, selon les coordonnées de la position de clic acquise et les coordonnées de la position finale ; et
une troisième unité de détermination, configurée pour déterminer la direction de mouvement du curseur selon l'angle inclus calculé.

7. Dispositif selon la revendication 6, dans lequel la troisième unité de détermination est configurée pour, si 2kπ - π/4 < α ≤ 2kπ + π/4, alors déterminer que la direction de mouvement du curseur est vers la droite ; ou si 2kπ + π/4 < a ≤ 2kπ + 3π/4, alors déterminer que la direction de mouvement du curseur est vers le haut ; ou si 2kπ + 3π/4 < α ≤ 2kπ + 5π/4, alors déterminer que la direction de mouvement du curseur est vers la gauche ; ou si 2kπ + 5π/4 < α ≤ 2kπ + 7π/4, alors déterminer que la direction de mouvement du curseur est vers le bas, où k est un nombre entier arbitraire, π est 180 degrés et α est l'angle inclus.

8. Dispositif selon la revendication 6 ou 7, dans lequel le module d'exécution comprend :
une unité de mouvement, configurée pour déplacer le curseur le long de la direction de mouvement commençant à la position de clic selon une fréquence de mouvement prédéfinie ; et
une quatrième unité de détermination, configurée pour, en réponse à l'opération de fin de mouvement du moyen tactile, déterminer que la position d'affichage du curseur dans la zone éditable est actuellement la position à afficher.

9. Dispositif selon la revendication 6 ou 7, dans lequel le module d'exécution comprend en outre :
une cinquième unité de détermination, configurée pour déterminer une durée de glissement selon la position de clic et la direction de glissement ; et
une seconde unité de calcul, configurée pour calculer le nombre de fois de mouvement selon la durée de glissement et la fréquence de mouvement prédéfinie ; et
une sixième unité de détermination, configurée pour déplacer le curseur le long de la direction de mouvement commençant à la position de clic selon le nombre de mouvements calculé, et déterminer que la position d'affichage du curseur dans la zone éditable est actuellement la position à afficher.

10. Dispositif selon la revendication 8 ou 9, dans lequel le dispositif comprend en outre :
un module d'enregistrement, configuré pour enregistrer le nombre de fois que le moyen tactile exécute une opération de glissement sur l'écran de terminal mobile ; et
un module d'ajustement, configuré pour, lorsque le nombre d'opérations de glissement excède un nombre de fois prédéfini, ajuster la fréquence de mouvement prédéfinie.
